# EUROPÄISCHE PATENTSCHRIFT

(11) **EP 2 850 508 B1**
(45) Veröffentlichungstag und Bekanntmachung des Hinweises auf die Patenterteilung: **18.05.2016**
(21) Anmeldenummer: 13710302.4
(22) Anmeldetag: 14.03.2013
(51) Int. Cl.: G06F 3/038, G06F 3/0485, G06F 3/0362, G06F 3/0489, B60K 35/00, B60K 37/06

(54) **ANZEIGEVORRICHTUNG EINES KRAFTWAGENS UND VERFAHREN ZUM BETREIBEN DER ANZEIGEVORRICHTUNG**
DISPLAY DEVICE OF A MOTOR VEHICLE AND METHOD FOR OPERATING THE DISPLAY DEVICE
DISPOSITIF D'AFFICHAGE DE VÉHICULE AUTOMOBILE ET PROCÉDÉ POUR LE FAIRE FONCTIONNER

(30) Priorität: 18.05.2012 DE 102012009881
(43) Veröffentlichungstag der Anmeldung: 25.03.2015
(73) Patentinhaber: Audi AG, 85045 Ingolstadt (DE)
(72) Erfinder: SCHLAGBAUER, Georg, 93336 Laimerstadt (DE)
(74) Vertreter: Brandt, Kai
(86) Internationale Anmeldenummer: PCT/EP2013/000788
(87) Internationale Veröffentlichungsnummer: WO 2013/170918

(56) Entgegenhaltungen:
- EP-A2- 1 553 484
- US-A1- 2003 151 588
- US-A1- 2011 169 733

## Beschreibung

Die Erfindung betrifft ein Verfahren zum Betreiben einer Anzeigevorrichtung eines Kraftwagens, durch welches auf einem Bildschirm ein Bildinhalt in einem Bildlauf bewegt wird. Hierbei wird der Bildinhalt in einem Verschiebungsschritt oder mehreren nacheinander ausgeführten Verschiebungsschritten bis zu einer Zielposition hin verschoben. Der Bildlauf kann durch einen Benutzer der Anzeigevorrichtung ausgelöst werden, indem dieser ein Bedienelement betätigt. Das Bedienelement erzeugt bei Betätigt-Werden zumindest einen Signalpuls. Zu der Erfindung gehört auch eine Anzeigevorrichtung eines Kraftwagens, die gemäß dem erfindungsgemäßen Verfahren betrieben wird.

Bei einem Kraftwagen kann vorgesehen sein, einem Benutzer auf einem Bildschirm einer Anzeigevorrichtung eine Liste von Funktionsnamen anzuzeigen, aus denen der Benutzer auswählen kann, um die benannte Funktion zu aktivieren. Die Anzeigevorrichtung kann beispielsweise Bestandteil eines Kombiinstruments oder eines Infotainmentsystems sein. Der Benutzer muss dann beispielsweise einen Cursor über die Listenelementen bewegen können, um die gewünschte Funktion zu markieren. Genauso kann vorgesehen sein, dass der Benutzer die Listenelemente in der dargestellten Liste so verschiebt, dass der gewünschte Listeneintrag beispielsweise ganz oben steht und hierdurch bei Betätigen einer Bestätigungstaste aktiviert wird. Zum Bewegen des Cursors bzw. zum Verschieben der Listeninhalte kann als Bedienelement dem Benutzer beispielsweise ein Drehsteller oder ein Wippschalter in dem Kraftwagen zur Verfügung gestellt werden. Mit solchen Bedienelementen lassen sich in der Regel nicht kontinuierliche Signale erzeugen. So kann das Drehrad eines Drehstellers Raststellungen aufweisen. Bei Änderung der Raststellung wird dies von einem Encoder des Drehstellers in Zeitabständen von z.B. 30 ms bis 60 ms erfasst und daraufhin ein elektrischer Signalpuls erzeugt, welcher die Drehrichtung angibt und signalisiert, um wie viele Raststellung seit der letzten Erfassung das Drehrad verschoben wurde. Ein solcher Signalpuls wird auch als Tick bezeichnet.

Bei Betätigen des Bedienelements erfolgt auf dem Bildschirm die Verschiebung beispielsweise eines Cursors dennoch nicht sprunghaft mit jedem empfangenen Signalpuls, sondern in einer gleitenden Bewegung. Hierzu wird in der Anzeigevorrichtung in Abhängigkeit von den Signalpulsen ein Speicherinhalt eines Zielpositionsspeichers verändert und dann der gleitende Bildlauf in mehreren Verschiebungsschritten des Bildinhalts auf dem Bildschirm bis zu der Zielposition hin verschoben. Eine solche gleitende Verschiebung ist beispielsweise aus Druckschrift EP 1 553 484 A2 bekannt. Diese Technik wird auch als "Scrollen" bezeichnet. Die Aktualisierung der Bildschirmanzeige erfolgt beim Scrollen mit einer Bildwiederholfrequenz, die z.B. 60 Hz oder 120 Hz betragen kann und deshalb die Darstellung fließender Bewegungen erlaubt.

Wenn der Benutzer durch Betätigen des Bedienelements mehrere Signalpulse erzeugt, wird hierdurch der Speicherinhalt nacheinander aktualisiert. Währenddessen wird der gleitende Bildlauf durchgeführt. Nachdem der Benutzer dann mit dem Drehen des Drehrades aufgehört hat, ist noch längst nicht die Zielposition erreicht. So kann es zu einem unerwünscht langen Nachlauf des Verschiebevorgangs auf dem Bildschirm kommen. Ändert hierbei der Benutzer noch die Drehrichtung des Drehrades während des Betätigens, so kann es vorkommen, dass der Cursor zunächst noch eine Weile in die eine Richtung verschoben wird und erst dann seine Bewegungsrichtung ändert, während der Benutzer schon mit dem Drehen des Drehrades aufgehört hat. Hier verliert die Bewegung des Bildinhaltes auf dem Bildschirm den Bezug zur eigentlichen Bedienhandlung.

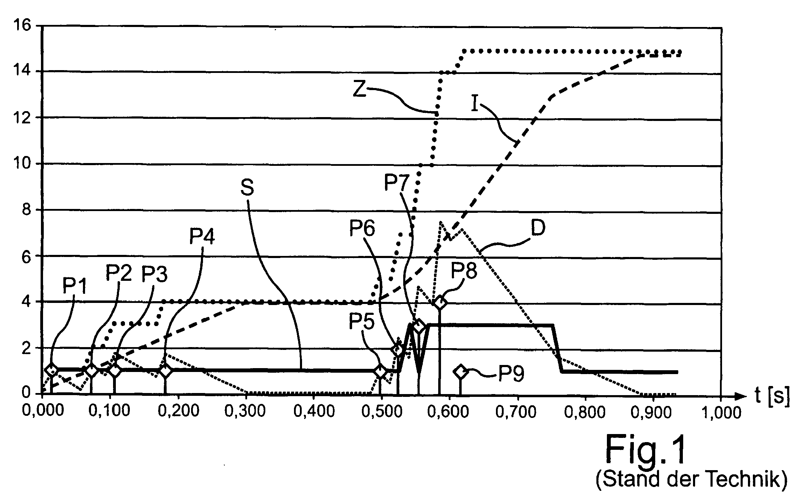

Für solche Animationen kann deshalb ein Animationsbeschleunigungsverfahren vorgesehen sein. Dies ist im Folgenden anhand von Fig. 1 erläutert.

In Fig. 1 ist auf einer Zeitachse entlang der Zeit t (hier in Sekunden angegeben) beispielhaft angezeigt, wann von einem Bedienelement, wie eben beispielsweise einem Drehsteller, Signalpulse P1 bis P9 erzeugt werden und bei einer Steuereinrichtung einer Anzeigevorrichtung eines Kraftwagens eintreffen. Bei normaler Betätigungsgeschwindigkeit beträgt eine Pulsamplitude dieser Ticks Eins. Ein Tick mit der Pulsamplitude Eins bewirke hier eine Verschiebung eines Bildinhalts, z.B. eines Cursors, um eine bestimmte Verschiebungsdistanz, beispielsweise 5 Pixel oder 10 Pixel (Pixel - Bildelement) auf dem Bildschirm der Anzeigevorrichtung. In dem Diagramm von Fig. 1 trifft dies für die Signalpulse P1 bis P5 und P9 zu. Die Signalpulse P6 bis P8 weisen größere Pulsamplituden auf, da hier der Benutzer das Bedienelement mit einer schnelleren Bewegung verstellt hat. Entsprechend größer muss die Verschiebung des Bildinhalts sein. In dem Diagramm von Fig. 1 ist des Weiteren der Speicherinhalt Z des erwähnten Zielpositionsspeichers angegeben. Er wird mit dem Eintreffen jedes Pulses P1 bis P9 verändert. Das Zeitraster, in welchem der Speicherinhalt Z in Fig. 1 über der Zeit aufgetragen ist, entspricht demjenigen, wie es durch die Bildwiederholungsfrequenz der Anzeigevorrichtung festgelegt ist.

Zu einem Zeitpunkt t = 0 stimme eine Ist-Position I des Bildinhalts auf dem Bildschirm mit der durch den Speicherinhalt Z vorgegebenen Zielposition überein. Mit dem Eintreffen eines Signalpulses ergibt sich eine Differenz D zwischen dem Speicherinhalt Z und der Ist-Position I. Der Bildinhalt wird daraufhin in einem gleitenden Bildlauf mit einer konstanten Geschwindigkeit zur Zielposition Z hin bewegt. Die Schrittweite eines jeden Verschiebungsschritts bei der Aktualisierung des Bildschirminhalts beträgt zunächst eine Basisschrittweite, die bis zum Eintreffen des Signalpulses P6 der Verschiebung zugrunde gelegt wird. Aus diesem Grund ergibt sich ein linearer Kurvenverlauf der Ist-Position I bis zum Zeitpunkt t = 0,3 Sekunden, in welchem die Ist-Position wieder mit der Zielposition übereinstimmt. Die Schrittweite wurde durch eine Bildlaufgeschwindigkeit für jede Bildwiederholung festgelegt (in Fig. 1 der Graph mit durchgezogener Linie). Mit dem Eintreffen der Signalpulse P5 und P6 übersteigt die Differenz D einen Schwellenwert, der hier beispielsweise 2 betragen kann. Aus diesem Grund wird die Bildlaufgeschwindigkeit nach dem Eintreffen des Signalpulses P5 vergrößert. Der Bildinhalt wird damit für jeden neuen Bildaufbau in größeren Verschiebungsschritten verschoben. Zwischen dem Eintreffen der Signalpulse P6 und P7 unterschreitet hierdurch die Differenz D wieder den Schwellenwert. Die Bildlaufgeschwindigkeit wird daraufhin wieder auf 1 verringert (t=0.55s). Anschließend trifft der Signalpuls P7 ein, so dass die Differenz D wieder über dem Schwellenwert liegt und die Bildlaufgeschwindigkeit wieder auf den Wert 3 eingestellt wird. Der Benutzer nimmt diesen Wechsel der Bildlaufgeschwindigkeit als unruhige, ruckelnde Bewegung des Bildinhalts auf dem Bildschirm wahr.

Druckschrift US2003/0151588A1 lehrt ein Verfahren für eine gleichmäßige Cursorbewegung durch eine Aufteilung eines Eingabesignalpulses in Teilpulse.

Eine Aufgabe der vorliegenden Erfindung ist es, einen gleichmäßigen Bildlauf mit variabler Bildlaufgeschwindigkeit bei einer Anzeigevorrichtung eines Kraftwagens zu ermöglichen.

Die Aufgabe wird durch ein Verfahren gemäß Patentanspruch 1 und eine Anzeigevorrichtung gemäß Patentanspruch 13 gelöst. Vorteilhafte Weiterbildungen der Erfindung sind durch die Unteransprüche gegeben.

Das erfindungsgemäße Verfahren sieht vor, zu wenigstens einem der Signalpulse eine Folge aus mehreren Teilpulsen zu erzeugen und den Speicherinhalt des Zielpositionsspeichers mit der Bildwiederholfrequenz auf der Grundlage der Teilpulse stufenweise zu verändern. Mit anderen Worten wird also das Zeitraster, in welchem die Signalpulse durch das Bedienelement erzeugt werden, auf das Zeitraster der Bildschirmanimation mittels einer Ratenanpassung angepasst. Die Erfindung weist den Vorteil auf, dass die Zielposition nie sprunghaft gemäß der Pulsamplitude eines Signalpulses angepasst wird, sondern nur in kleinen Teilschritten. Damit können die beschriebenen ruckelnden Bewegungen vermieden werden. Das erfindungsgemäße Verfahren löst die Aufgabe insbesondere für eine Anzeigevorrichtung, bei welcher ein Bildinhalt, z.B. ein Cursor oder eine Liste, auf einem Bildschirm verschoben wird, dessen Anzeige mit einer Bildwiederholfrequenz aktualisiert wird, die größer als die maximale Pulsrate der Signalpulse ist, die ein Bedienelement der Anzeigevorrichtung bei Betätigt-Werden erzeugt. Gerade hier hat sich die Anpassung der Zeitraster als besonders günstig erwiesen.

Im Zusammenhang mit der Erfindung kann es sich bei einem bewegten Bildinhalt beispielsweise um einen Cursor handeln, der über ein Hintergrundbild gleitet. Der Cursor muss dabei den Bildhintergrund nicht vollständig abdecken. Es kann sich beispielsweise auch um eine veränderte Darstellung des Hintergrunds, etwa in invertierten Farben, handeln. Weitere Beispiele für bewegbare Bildinhalte sind Listeninhalte, also etwa Auswahlmenüs, und andere graphische Darstellungen oder auch Schatteneffekte, die als transparente farbige Felder über stationäre Bildinhalte bewegt werden.

Das erfindungsgemäße Verfahren kann mit der erfindungsgemäßen Anzeigevorrichtung durchgeführt werden. Diese weist einen Bildschirm, wenigstens ein Bedienelement, welches bei Betätigt-Werden zumindest einen Signalpuls erzeugt, und eine Steuereinrichtung auf. Die Steuereinrichtung weist einen Zielpositionsspeicher auf und ist mit dem Bedienelement gekoppelt. Sie ist zudem dazu ausgewählt, auf dem Bildschirm einen Bildinhalt anzuzeigen und diesen gemäß einer Ausführungsform des erfindungsgemäßen Verfahrens auf den Bildschirm zu verschieben. Bei der Anzeigeeinrichtung handelt es sich bevorzugt um ein Kombiinstrument, wie es hinter dem Lenkrad eines Kraftwagens eingebaut sein kann, oder um ein Infotainment-System.

Im Zusammenhang mit der Erfindung kann das Bedienelement beispielsweise einen Drehsteller, einen Kippschalter oder ein Walze umfassen. Das Bedienelement kann aber auch ein Touchpad umfassen. Ein solches Touchpad weist eine Bedienfläche auf, über die ein Benutzer z.B. mit einem Finger streichen kann, was dann von einer Sensoreinrichtung des Touchpads (z.B. mit Berührungssensoren, Infrarotsensoren, kapazitive Sensoren) erfasst wird. Die Sensoreinrichtung erzeugt dann in einem vorbestimmten Zeitmuster ein Signal, das die Koordinaten des aktuellen Berührpunktes beschreibt. Die Differenz der Koordinaten des aktuellen Berührpunktes zu den Koordinaten des vorangehenden Berührpunktes kann dann ebenfalls als ein Signalpuls verarbeitet werden. Auch diese Differenzpulse können in Teilpulse aufgeteilt werden.

Eine Weiterbildung des erfindungsgemäßen Verfahrens sieht vor, dass zum Erzeugen der Teilpulse jeder Signalpuls mit einem Filter gefiltert wird. Die Folge der Teilpulse, die zu einem Signalpuls dann erzeugt wird, entspricht der Impulsantwort des Filters. Somit ist es in besonders einfacher und übersichtlicher Weise möglich, geeignete Folgen von Teilpulsen festzulegen. Besonders zweckmäßig hat sich hier beispielsweise erwiesen, ein Filter mit einer Impulsantwort zu verwenden, die aus der Folge der Werte 0,4; 0,4; 0,2 besteht. Durch den kleineren letzten Wert 0,2 ergibt sich hierbei ein Ausblendeffekt. Die Aufteilung kann aber auch anders gewählt werden. Zudem kann eine Schaltlogik vorgesehen sein, durch welche vermieden wird, dass sich Teilpulse von aufeinanderfolgenden Signalpulsen direkt überlagern. Hierdurch kann Jitter bei annähernd gleicher Drehstellerbewegung zusätzlich vermieden werden.

Eine andere Weiterbildung des Verfahrens sieht vor, dass die Summe der Pulsamplitudenwerte der Teilpulse, die zu einem Signalpuls erzeugt werden, gleich dem Pulsamplitudenwert des Signalpulses selbst ist. Dies wird beispielsweise durch das oben beschriebene Filter mit der Impulsantwort 0,4; 0,4; 0,2 erreicht. Durch Beschränken der Summe der Pulsamplitudenwerte wird ein Verstärkungseffekt vermieden, der zu einem zu großen Wert für die Zielposition führen könnte.

Eine andere Ausführungsform des Verfahrens sieht vor, die Folge der zu einem Signalpuls gebildeten Teilpulse so kurz zu wählen, dass sie nicht mehr als 4 Teilpulse bei einer Bildwiederholfrequenz von 60 Hz bzw. nicht mehr als 8 Teilpulse bei einer Bildwiederholfrequenz von 120 Hz umfasst. Hierdurch bleibt ein zeitlicher Bezug zur tatsächlichen Betätigung des Bedienelements erhalten. Je nach verwendeter Hardware kann diese Bedingung auch dadurch erfüllt werden, dass alle zu einem Signalpuls erzeugen Teilpulse in den Zielpositionsspeicher innerhalb einer Zeitdauer eingetragen werden, die kürzer als 80 ms, insbesondere kürzer als 40 ms, ist. Diese Zeitwerte haben sich in Versuchen als besonders wichtige Eckwerte erwiesen.

Die beschriebene Aufteilung jedes Signalpulses in mehrere Teilpulse macht es besonders einfach, die Bildlaufgeschwindigkeit beim Verschieben eines Bildinhalts variabel zu gestalten. Hier sei angemerkt, dass die Bildlaufgeschwindigkeit bei gegebener Bildwiederholfrequenz sich direkt aus der Schrittweite eines Verschiebungsschritts ergibt, also der Distanz, um welche der Bildinhalt auf dem Bildschirm bei jedem neuen Bildaufbau verschoben wird. Zum Bereitstellen einer variablen Geschwindigkeit sieht nun eine Ausführungsform des Verfahrens vor, eine Schrittweite zumindest eines der Verschiebungsschritte in Abhängigkeit von einem Differenzwert zwischen einer Ist-Position des Bildinhalts auf dem Bildschirm und der Zielposition festzulegen. Durch Erzeugen und Überlagern der Teilpulse bleibt hierbei der ruckelnde Effekt aus.

Gemäß einer Weiterbildung dieses Ansatzes wird der Differenzwert einem Multiplikationsfaktor für eine Basisschrittweite zugeordnet und die Schrittweite dann durch Multiplizieren der Basisschrittweite mit dem Multiplikationsfaktor berechnet. Hierdurch ergibt sich der Vorteil, dass sich bei einer Anzeigevorrichtung durch Festlegen der Basisschrittweite sehr einfach eine grundsätzliche Dynamik festlegen lässt, mit welcher sich Bildinhalte auf dem Bildschirm bewegen. Ein Benutzer bekommt dann sehr viel einfacher das Gefühl, wie er ein Bedienelement zu Betätigen hat, um z.B. einen Cursor um eine gewünschte Distanz zu verschieben. Er kann dessen Dynamik einfacher einschätzen.

Durch das Aufteilen eines Signalpulses in eine Folge von Teilpulsen ist es sogar möglich, vollständig auf ein Nachführen des Bildinhalts mit einer begrenzten Bildlaufgeschwindigkeit zu verzichten. Hierzu sieht eine Ausführungsform des Verfahrens vor, dass zumindest zeitweise der Bildinhalt in jedem Verschiebungsschritt unmittelbar auf die durch den Speicherinhalt des Zielpositionsspeichers aktuell vorgegebene Zielposition verschoben wird. Dass dies für den Benutzer weiterhin zu einem nachvollziehbaren Bildlauf führt, kann hier in einfacher Weise dadurch gewährleistet werden, dass die Folge der Teitpulse entsprechend festgelegt wird. Hierfür sind lediglich einfache Tests nötig. Das erfindungsgemäße Verfahren sieht in diesem Zusammenhang vor, den Bildinhalt doch nicht direkt auf die Zielposition, sondern auf eine aus dem Speicherinhalt des Zielpositionsspeichers mittels eines Glättungsfilters gebildete abgeleitete Zielposition zu verschieben. Insbesondere ist hier vorgesehen, ein PT1-Glied als Glättungsfilter zu verwenden. Hierzu hat sich herausgestellt, dass diese Variante eine sehr zeitnahe Animation bei einer Betätigung des Bedienelements führt und dennoch ein Benutzer sehr gut die Veränderungen auf dem Bildschirm überblicken kann. Der haptische Bezug kann hier sehr günstig eingestellt werden.

Die Anpassung der Bildlaufgeschwindigkeit muss nicht unbedingt in Abhängigkeit von dem Differenzwert erfolgen. Dies setzt ja voraus, dass sich zunächst ein Nachlauf einstellen muss. Eine sehr viel schnellere Anpassung der Bildlaufgeschwindigkeit ergibt sich, wenn die Bildlaufgeschwindigkeit, sprich die Schrittweite, dann vergrößert wird, wenn Signalpulse mit einer vorbestimmten maximalen Pulsrate erzeugt werden und/oder eine Pulsamplitude zumindest eines Signalpulses größer als ein vorbestimmter Schwellenwert ist. Dann ist bereits klar, dass der Benutzer das Bedienelement mit besonders heftigen Bewegungen bedient. Dies ist ein klarer Hinweis dafür, dass er einen schnellen Bildlauf wünscht.

Treffen danach für eine Zeitdauer zwischen z.B. 30 ms bis 60 ms keine erneuten Signalpulse ein, so sollte die aktuelle Animationsgeschwindigkeit zunächst beibehalten werden und erst nach dieser Zeitdauer, wenn eine definierte Bedienlücke erkannt wurde, die Animationsgeschwindigkeit wieder auf ein normales Maß gesenkt werden. Entsprechend sieht eine Ausführungsform des Verfahrens vor, erst wieder die Bildlaufgeschwindigkeit zu verringern, falls für eine vorbestimmte Zeitdauer keine weiteren Signalpulse erzeugt werden, wobei die Zeitdauer bevorzugt in einem Bereich von z.B. 30 ms bis 60 ms liegt.

Das erfindungsgemäße Verfahren lässt sich auch mit bereits bekannten Methoden zur Animationssteuerung kombinieren. Eine Ausführungsform des Verfahrens sieht in diesem Zusammenhang vor, eine Schrittweite zumindest eines der Verschiebungsschritte in Abhängigkeit von einer Animationskennlinie einzustellen. Eine solche Animationskennlinie legt fest, in dem Fall, dass die Zielposition derart weit von der Ist-Position entfernt ist, dass auf jeden Fall mehrere Verschiebungsschritte nötig sind, den Bildinhalt am Anfang der Verschiebung langsam, in einem mittleren Bereich der Verschiebungsphase schneller und bei Annähern an die Zielposition wieder langsam zu verschieben. Diese Form der Geschwindigkeitssteuerung wird auch "Ease in, ease out" genannt.

Wie bereits ausgeführt, kann auch vorgesehen sein, mit der beschriebenen Anzeigevorrichtung Listeneinträge in einer Liste oder einen Cursor über solche Listeeinträge zu verschieben. Ist beim Verschieben die Bildlaufgeschwindigkeit derart groß eingestellt, dass aufgrund der fest vorgegebenen Bildwiederholungsrate nur ein bis zwei Zwischenschritte dargestellt werden, während sich z.B. der Cursor von einem Listeneintrag zum nächsten bewegt, so sollte auf das Darstellen dieser Zwischenschritte verzichtet werden und stattdessen auf feste Anzeigepositionen auf den einzelnen Listeneinträgen übergegangen werden. Mit anderen Worten wird der Cursor dann genau auf den Listeneinträgen und praktisch ohne Animation von einem Listeneintrag zum nächsten bewegt. Andernfalls nimmt der Benutzer die Übergänge nur als unschöne Momentaufnahmen wahr, die aber nicht mehr als saubere Animation mit Bewegungsindikation wahrgenommen werden. Auf Grundlage dieser Erkenntnis sieht die Erfindung eine Weiterbildung des Verfahrens vor, bei welcher überprüft wird, ob die Pulsrate und/oder eine Pulsamplitude zumindest eines Signalpulses größer als ein vorbestimmter Schwellenwert ist. Gegebenenfalls wird eine Schrittweite zumindest eines der Verschiebungsschritte auf einen Rasterabstand von Listeneinträgen in einer Liste oder auf ein Vielfaches des Rasterabstands eingestellt. Natürlich können unterschiedliche Schwellenwerte verwendet werden, je nachdem, ob die Pulsrate oder die Pulsamplitude überprüft wird.

Im Folgenden wird die Erfindung noch einmal genauer anhand eines konkreten Ausführungsbeispiels erläutert. Dazu zeigt:
- Fig. 1: ein Diagramm zu einer Verschiebung eines Bildinhalts, wie sie gemäß dem Stand der Technik realisiert wird,
- Fig. 2: eine schematische Darstellung einer bevorzugten Ausführungsform der erfindungsgemäßen Anzeigevorrichtung,
- Fig. 3: ein Diagramm zu einer Verschiebung eines Bildinhaltes gemäß einer Ausführungsform des erfindungsgemäßen Verfahrens und
- Fig. 4: ein Diagramm zu einer Verschiebung eines Bildinhalts gemäß einer weiteren Ausführungsform des erfindungsgemäßen Verfahrens.

Bei dem im Folgenden erläuterten Beispiel stellen die beschriebenen Komponenten der Anzeigevorrichtung und die beschriebenen Schritte der Verfahren jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

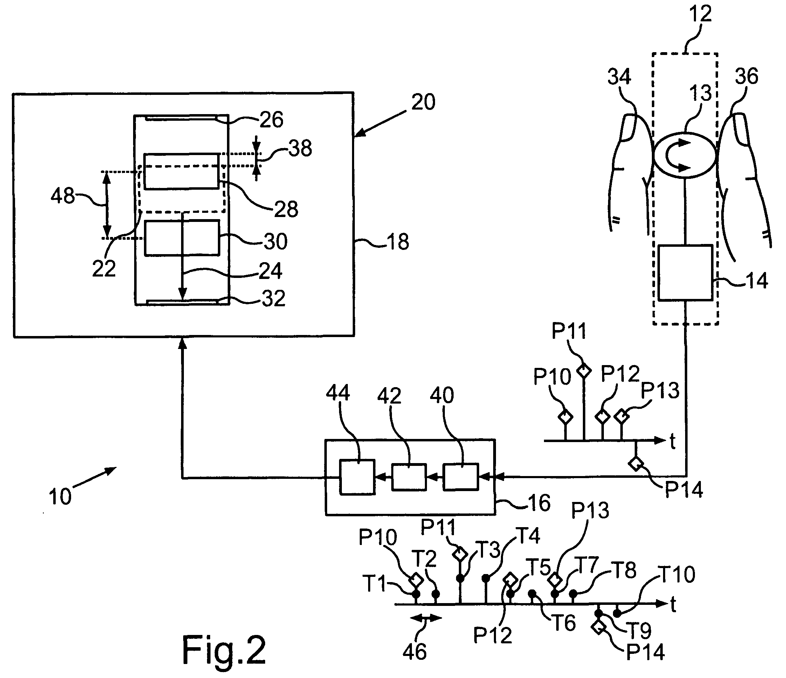

In Fig. 2 ist eine Anzeigevorrichtung 10 eines Kraftwagens, beispielsweise eines Personenkraftwagens, gezeigt. Die Anzeigevorrichtung kann einen Drehsteller 12 umfassen. Eine Drehbewegung eines Drehrades 13 wird von einem Encoder 14, der mit dem Drehrad 13 gekoppelt ist, durch elektrische Signalpulse signalisiert. Eine Steuereinrichtung 16 der Anzeigevorrichtung 10, z.B. ein Steuergerät, empfängt die Signalpulse des Encoders 14. Die Steuereinrichtung 16 steuert einen Bildschirm 18 der Anzeigevorrichtung in Abhängigkeit von den empfangenen Signalpulsen an. Bei der Anzeigevorrichtung 10 kann es sich beispielsweise um einen Bestandteil eines Infotainmentsystems handeln. Bei dem Bildschirm 18 kann es sich auch um ein Kombiinstrument handeln, das hinter einem Lenkrad eines Kraftwagens eingebaut ist. Anstelle des Drehstellers 12 kann auch ein anderes Bedienelement, wie etwa eine Walze oder ein Kippschalter oder ein Touchpad, bereitgestellt sein.

Auf einer Anzeige 20 auf dem Bildschirm 18 wird in dem vorliegenden Beispiel ein Bildinhalt 22 in einer fließenden Bewegung (Animation) in eine Bewegungsrichtung 24, hier nach unten, bewegt. Hier sei angenommen, dass der bewegte Bildinhalt 22 einen Cursor darstellt. Bei der Anzeige 20 kann es sich beispielsweise um eine Liste handeln, die aus einzelnen Listeneinträgen 26, 28, 30, 32 gebildet ist. Die Listeneinträge 26 bis 32 können beispielsweise jeweils für eine Funktion stehen, die durch den Kraftwagen bereitgestellt wird und aus denen ein (nicht dargestellter) Fahrer eine auswählen möchte. Beispielsweise kann ein Listeneintrag für das Aktivieren eines Radios stehen.

Bei dem bewegten Bildinhalt 22 kann es sich auch um einen Bildausschnitt handeln, der einen Teil der Anzeige 20 oder die ganze Anzeige 20 umfasst. Dann wird der Inhalt diese Bildausschnitts in einer als "Scrollen" bezeichneten Weise bewegt. Der bewegte Bildinhalt kann also z.B. auch durch die Listeneinträge 26 bis 32 gebildet sein.

Für die weitere Erläuterung des Beispiels sei angenommen, dass der Cursor 22 zunächst auf dem Listeneintrag 28 positioniert war. Der Fahrer möchte den Listeneintrag 32 auswählen. Er dreht dazu das Drehrad 13 mit Fingern 34, 36. Hierdurch wechselt das Drehrad 13 zwischen einzelnen Raststellungen. Das Wechseln der Raststellungen wird durch den Encoder 14 erkannt. Dieser erzeugt bei jedem Erkennungsvorgang in einem Zeitraster von beispielsweise 30 ms oder 50 ms einen Signalpuls. Eine maximale Pulsrate kann somit hier beispielsweise 1/30 ms = 33,3 Hz bzw. 1/50 ms = 20 Hz betragen. Das Vorzeichen eines Signalpulses zeigt die Drehrichtung und dessen Pulsamplitude die Anzahl der seit dem letzten Erkennungsvorgang durchlaufenen Raststellungen an. In Fig. 2 ist zur Veranschaulichung eine Zeitachse dargestellt, auf welcher über der Zeit t die beispielhafte Signalpulse P10 bis P14 dargestellt sind.

Durch das Drehen des Drehrades 13 wird der Cursor 22 in die Bewegungsrichtung 24 verschoben. Die sich hierdurch ändernde Anzeige 20 wird mit einer Bildwiederholungsrate von beispielsweise 60 Hz dargestellt. In jeweils zwei aufeinanderfolgenden Darstellungen wird der Cursor 22 dabei um eine Schrittweite 38 verschoben dargestellt. In Fig. 2 ist diese Verschiebung für den ersten Verschiebungsschritt dargestellt, wenn der Cursor 22 sich vom Listeneintrag 28 in Bewegungsrichtung 24 wegbewegt.

Die Bildlaufgeschwindigkeit des Cursors 22 und die Bewegungsrichtung hängt dabei von der Geschwindigkeit bzw. Drehrichtung ab, mit welcher der Benutzer an dem Drehsteller 12 dreht. Durch das Steuergerät 16 werden die Signalpulse, oder kurz Pulse, P10 bis P14 dahingehend ausgewertet, wie der Cursor 22 auf der Anzeige 20 zu bewegen ist. Hierzu weist die Steuereinrichtung 16 eine Hochtastvorrichtung 40, einen Zielpositionsspeicher 42 und eine Darstellungseinrichtung 44 auf. Die Hochtasteinrichtung 40, dem Zielpositionsspeicher 42 und der Darstellungseinrichtung 44 können jeweils beispielsweise ein Programm eines digitalen Signalprozessors umfassen oder einen Teil eines ASIC (application specific integrated circuit) oder eines FPGA (field programmable gate array).

Die Hochtasteinrichtung 40 erzeugt bei Empfangen eines jeden Pulses P10 bis P14 aus dem empfangenen Puls mehrere Teilpulse T1 bis T10. In Fig. 2 ist hierzu das von der Hochtasteinrichtung 40 zu den Pulsen P10 bis P14 gezeigte Signal aus den Teilpulsen T1 bis T10 in einem Diagramm über der Zeit t aufgetragen dargestellt. Der besseren Übersichtlichkeit halber ist in diesem Diagramm zusätzlich gezeigt, aus welchem der Pulse P10 bis P14 die Teilpulse T1 bis T10 gebildet sind. So ist beispielsweise aus dem Puls P10 die Folge der Teilpulse T1 und T2 gebildet. Ausgegeben werden von der Hochtasteinrichtung 14 aber nur die Teilpulse T1 bis T10 selbst. Die zu einem Puls erzeugten jeweiligen Teilpulse werden mit einer Pulsrate an den Zielpositionsspeicher 42 ausgegeben, welche der Bildwiederholungsrate entspricht. Mit anderen Worten ist ein zeitlicher Abstand 46 zwischen zwei Teilpulsen, die zum selben Puls gehören, gleich dem inversen Wert der Bildwiederholfrequenz. Bei der Hochtasteinrichtung 40 kann es sich beispielsweise um ein Filter handeln. Bei dem in Fig. 2 gezeigten Beispiel kann die Impulsantwort des Filters aus einer Folge der Werte 0,5 und 0,5 gebildet sein.

In dem Zielpositionsspeicher 42 ist ein Wert für die Zielposition gespeichert, zu welcher der Cursor 22 auf der Anzeige 20 durch die animierte Verschiebung hin bewegt werden soll. Die Animation dauert also so lange an, bis die tatsächliche Ist-Position des Cursors 22 auf dem Bildschirm 20 der Zielposition entspricht. Mit jedem Eintreffen eines Teilpulses T1 bis T10 am Zielpositionsspeicher 42 wird der Wert für die Zielposition gemäß der Pulsamplitude dieses Teilpulses verändert.

Mit jedem Empfang eines Teilpulses T1 bis T10 wird im Zielpositionsspeicher 42 der Wert für die Zielposition entsprechend der Pulsamplitude und dem Vorzeichen des Teilpulses verändert.

Die Darstellungseinrichtung 44 vergleicht die Ist-Position des Cursors 22 mit dem Wert der Zielposition aus dem Zielpositionsspeicher 42. Hierbei kann vorgesehen sein, dass beim Berechnen einer neuen Anzeige für eine Bildauffrischung die Schrittweite 38 in Abhängigkeit davon festgelegt wird, wie groß die Differenz zwischen der Ist-Position und der aktuellen Zielposition ist. Es kann auch vorgesehen sein, dass für den Fall, dass die Differenz einen Schwellwert überschreitet, die Schrittweite 38 gleich einem Rastermaß 48 gewählt wird oder einem Vielfachen des Rastermaßes 48.

Nach Festlegen der Schrittweite 38 wird durch die Darstellungseinrichtung 44 eine Anzeige (d.h. Bildpunktewerte in einem Graphikspeicher oder Positionswerte bei einem 3D-Graphikchip) berechnet, bei welchem der Cursor 22 im Vergleich zur aktuellen Anzeige 20 um die Schrittweite 38 verschoben ist. Die so berechnete neue Anzeige wird dann auf dem Bildschirm 18 dargestellt. Dies wird durch die Darstellungseinrichtung 44 mit der Bildwiederholrate zyklisch wiederholt.

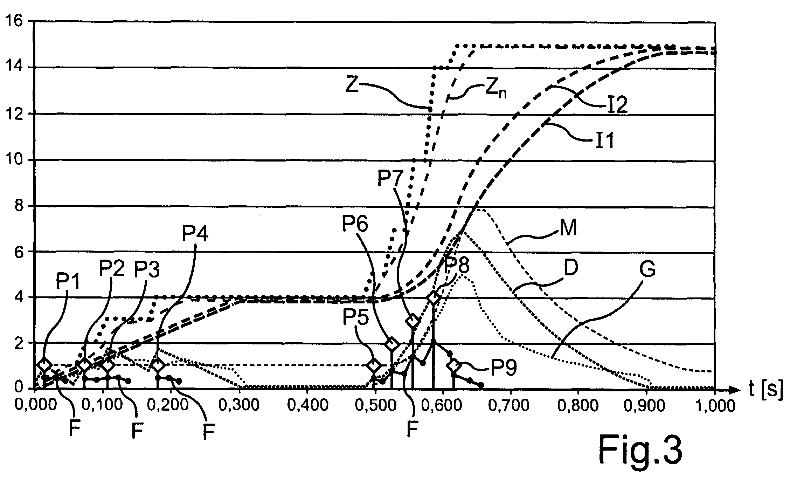

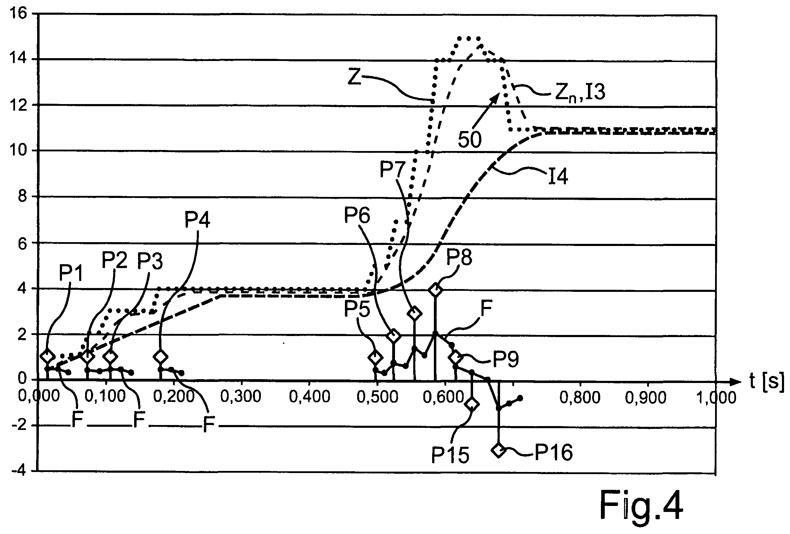

Im Folgenden ist anhand von Fig. 3 und Fig. 4 noch einmal der Bewegungsablauf eines Bildinhalts, wie beispielsweise des Cursors 22, genauer beschrieben. Für diese Erläuterungen sei hier nun angenommen, dass durch die Hochtasteinrichtung 40 jeder empfangene Signalpuls in drei Teilpulse aufgeteilt wird, wobei jeder Signalpuls auf drei aufeinander folgende Teilpulse aufgeteilt wird, deren Signalamplitude durch die folgenden Faktoren aus der Pulsamplitude des Signalpulses aufgeteilt wird: 0,4; 04; 0,2. Des Weiteren sei die Signalpulsfolge aus den Signalpulsen P1 bis P9 zugrunde gelegt, wie sie bereits im Zusammenhang mit Fig. 1 beschrieben worden ist. In Fig. 3 und Fig. 4 sind Diagramme desselben Typs wie in Fig. 1 dargestellt. Zur Vereinfachung des Vergleichs mit dem Beispiel aus Fig. 1 ist des Weiteren in Fig. 3 und Fig. 4 noch der Verlauf der Zielposition Z dargestellt, wie er sich ergeben würde, wenn ohne die Hochtasteinrichtung 40 der Zielpositionsspeicher 42 unmittelbar auf Grundlage der Signalpulse P1 bis P9 verändert würde.

Bei der Anzeigevorrichtung 10 wird durch die Hochtasteinrichtung 40, nun mit der neuen Impulsantwort (0,4; 0,4; 0,2), jeder Signalpuls P1 bis P9 in eine Folge von drei Teilpulsen aufgeteilt, die im Zeitraster der Bildwiederholung und mit der Bildwiederholfrequenz an den Zielpositionsspeicher 42 übermittelt werden. Die Folge der Teilpulse kann dabei jeweils eine Dauer von beispielsweise bis zu 40 ms aufweisen. Entsprechend können sich Teilpulse auch überlagern. In Fig. 3 ist deshalb nicht jeder einzelne Teilpuls mit einem Bezugszeichen versehen, sondern es ist die Gesamtfolge F der Teilpulse dargestellt. Durch jeden Teilpuls wird der Speicherinhalt im Speicher des Zielpositionsspeichers 42 verändert, woraus sich die Zielposition Zn zu den unterschiedlichen Zeitpunkten ergibt. Die Steuerungseinrichtung 44 berechnet in der beschriebenen Weise die Differenz D zwischen der Ist-Position des Cursors 22 und der Zielposition Zn. In Abhängigkeit von einem Betrag der Differenz D wird ein Multiplikationsfaktor M bestimmt. Der Multiplikationsfaktor M wird mit einem Wert für eine Basisschrittweite multipliziert, woraus sich die Schrittweite 38 ergibt, mit welcher der Cursor 22 auf die jeweils aktuelle Anzeige 20 im Vergleich zur unmittelbar vorangehenden Anzeige verschoben werden soll. Die daraus resultierende, über die Zeit veränderliche Ist-Position I1 ist ebenfalls in Fig. 3 aufgetragen. Alternativ zur Verwendung des Multiplikationsfaktors M kann auch unmittelbar aus der Differenz D ein Geschwindigkeitswert G berechnet werden, beispielsweise mittels eines PT1-Glieds. In Fig. 3 ist hierzu ebenfalls eine sich daraus ergebende Ist-Position I2 eingetragen.

In dem Beispiel von Fig. 4 ist gezeigt, wie bei Betätigung des Bedienelements, also etwa des Drehschalters 12, in Gegenrichtung die Zielposition entsprechend angepasst und auch entsprechend angefahren wird. Hierzu ist die bisher zugrunde gelegte Folge von Signalpulsen P1 bis P9 um zwei weitere Pulse P15 und P16 erweitert, die im Vergleich zu den Signalpulsen P1 bis P9 ein umgekehrtes Vorzeichen aufweisen. Beim Aufteilen der Signalpulse in Teilpulse ergibt sich die Folge F der Signalpulse, durch die bewirkt wird, dass die Zielposition Zn, wie sie bei Verwendung der Hochtasteinrichtung 40 ermittelt wird, keinen sprunghaften Übergang 50 aufweist, wie es bei der Zielposition Z der Fall ist.

Das Beispiel von Fig. 4 zeigt, dass es durch das Aufteilen der Signalpulse P1 bis P9, P 15, P16 in die Folge F der Teilpulse auch möglich ist, den Cursor 22 derart zu verschieben, dass seine Ist-Position I3 zu jedem Zeitpunkt der Zielposition Zn entspricht. Mit anderen Worten wird die Ist-Position stets innerhalb eines einzelnen Verschiebungsschritts an eine geänderten Zielposition Zn angeglichen. Der Benutzer der Anzeigevorrichtung 10 gewinnt hierdurch den Eindruck, dass er unmittelbar und verzögerungsfrei die Position des Cursors 22 mittels des Drehstellers 12 kontrolliert und dennoch keine ruckartigen Bewegungen durch den Cursor 22 auf der Anzeige 20 ausgeführt werden. Zur Veranschaulichung der Unmittelbarkeit der Steuerung ist in Fig. 4 noch der Verlauf der Ist-Position I4 dargestellt, der dem Verlauf I2 entspricht. Diese unmittelbare Anpassung der Ist-Position kann auch bei dem in Fig. 3 veranschaulichten Beispiel realisiert werden. Dann entspräche die Zielposition Zn (Fig. 3) der Ist-Position. Als eine weitere Variante kann in diesem Zusammenhang auch eine mittels eines PT-1-Gliedes gefilterte Positionskennlinie Zn vorgesehen sein (nicht dargestellt).

## Patentansprüche

1. Verfahren zum Betreiben einer Anzeigevorrichtung (10) eines Kraftwagens, durch welches auf einem Bildschirm (18) ein Bildinhalt (22) in einem Verschiebungsschritt oder in mehreren nacheinander mit einer Bildwiederholfrequenz ausgeführten Verschiebungsschritten bis zu einer Zielposition verschoben wird, hierbei die Zielposition durch einen Speicherinhalt (Zn) eines Zielpositionsspeichers (42) vorgegeben wird und der Speicherinhalt (Zn) in Abhängigkeit von wenigstens einem Signalpuls (P1 bis P16) verändert wird, den ein von einem Benutzer betätigtes Bedienelement (12) erzeugt, wobei von dem Bedienelement (12) aufeinanderfolgende Signalpulse (P1 bis P16) mit einer Pulsrate erzeugt werden, die kleiner als die Bildwiederholfrequenz ist,
**dadurch gekennzeichnet, dass**
zu dem wenigstens einen Signalpuls (P1 bis P16) jeweils eine Folge (F) aus mehreren Teilpulsen (T1 bis T10) erzeugt wird und der Speicherinhalt (Zn) mit der Bildwiederholfrequenz auf der Grundlage der Teilpulse (T1 bis T10) verändert wird, wobei zumindest zeitweise der Bildinhalt (22) mit jedem Verschiebungsschritt auf eine aus dem Speicherinhalt mittels eines Glättungsfilters gebildete Zielposition (I3) verschoben wird.

2. Verfahren nach Anspruch 1, wobei zum Erzeugen der Teilpulse (T1 bis T10) jeder Signalpuls (P1 bis P16) mit einem Filter (40) gefiltert wird.

3. Verfahren nach Anspruch 1 oder 2, wobei jeweils die Summe der Pulsamplitudenwerte der zu einem Signalpuls (P1 bis P16) erzeugten Teilpulse (T1 bis T9) gleich dem Pulsamplitudenwert des Signalpulses (P1 bis P16) selbst ist.

4. Verfahren nach einem der vorhergehenden Ansprüche, wobei die Folge (F) der zu einem Signalpuls (P1 bis P16) gebildeten Teilpulse (T1 bis T10) nicht mehr als 4 Teilpulse bei einer Bildwiederholfrequenz von 60 Hz bzw. nicht mehr als 8 Teilpulse bei einer Bildwiederholfrequenz von 120 Hz umfasst und/oder eine Dauer der Folge kürzer als 80 ms, insbesondere kürzer als 40 ms, ist.

5. Verfahren nach einem der vorhergehenden Ansprüche, wobei eine Schrittweite (38) zumindest eines der Verschiebungsschritte in Abhängigkeit von einem Differenzwert (D) zwischen einer Ist-Position (I1, I2) des Bildinhalts (22) auf dem Bildschirm (18) und der Zielposition (Zn) festgelegt wird.

6. Verfahren nach Anspruch 5, wobei der Differenzwert (D) einem Multiplikationsfaktor (F) für eine Basisschrittweite zugeordnet wird und die Schrittweite (38) durch Multiplizieren der Basisschrittweite mit dem Multiplikationsfaktor (F) berechnet wird.

7. Verfahren nach einem der vorhergehenden Ansprüche, wobei zumindest zeitweise der Bildinhalt (22) mit jedem Verschiebungsschritt unmittelbar auf die durch den Speicherinhalt (Zn) aktuell vorgegebene Zielposition verschoben wird.

8. Verfahren nach einem der vorhergehenden Ansprüche, wobei als das Glättungsfilter ein PT1-Glied verwendet wird.

9. Verfahren nach einem der vorhergehenden Ansprüche, wobei eine Bildlaufgeschwindigkeit durch Vergrößern der Schrittweite (38) zumindest eines bevorstehenden Verschiebungsschrittes erhöht wird, falls Signalpulse mit einer vorbestimmten maximalen Pulsrate erzeugt werden und/oder eine Pulsamplitude zumindest eines Signalpulses (P6, P7, P8) größer als ein vorbestimmter Schwellenwert ist.

10. Verfahren nach Anspruch 9, wobei die Bildlaufgeschwindigkeit erst wieder verringert wird, falls für eine vorbestimmte Zeitdauer keine weiteren Signalpulse erzeugt werden, wobei die Zeitdauer bevorzugt in einem Bereich von 30 ms bis 60 ms liegt.

11. Verfahren nach einem der vorhergehenden Ansprüche, wobei eine Schrittweite (38) zumindest eines der Verschiebungsschritte in Abhängigkeit von einer Animationskennlinie eingestellt wird.

12. Verfahren nach einem der vorhergehenden Ansprüche, wobei der Bildinhalt (22) einen Listencursor umfasst und überprüft wird, ob die Pulsrate und/oder eine Pulsamplitude zumindest eines Signalpulses größer als ein jeweiliger vorbestimmter Schwellenwert ist, und gegebenenfalls eine Schrittweite (38) zumindest eines der Verschiebungsschritte auf einen Rasterabstand (48) von Listeneinträgen (26 bis 32) der Liste oder ein Vielfaches des Rasterabstands (48) eingestellt wird.

13. Anzeigevorrichtung (10) eines Kraftwagens, mit einem Bildschirm (18), wenigstens einem Bedienelement (12, 14), welches bei Betätigt-Werden zumindest einen Signalpuls erzeugt, und einer Steuereinrichtung (16), welche einen Zielspeicher (42) aufweist und mit dem Bedienelement (12, 14) gekoppelt ist und welche dazu ausgelegt ist, auf dem Bildschirm (18) einen Bildinhalt (22) anzuzeigen und diesen gemäß einem Verfahren nach einem der vorhergehenden Ansprüche auf dem Bildschirm (18) zu verschieben.

14. Anzeigevorrichtung (10) nach Anspruch 13, wobei die Anzeigevorrichtung (10) als Kombiinstrument oder als Infotainment-System ausgestaltet ist.

## Claims

1. Method for operating a display device (10) of a motor vehicle, by means of which on a screen (18) an image content (22) is shifted in a displacement step or in a plurality of displacement steps performed one after the other at an image refresh rate to a target position, predefining the target position by a memory content (Zn) of a target positon memory (42) and the memory content (Zn) being changed as a function of at least one signal pulse (P1 to P16) that an operating element (12) activated by a user produces, successive signal pulses (P1 to P12) being generated by the operating element (12) at a pulse rate which is lower than an image refresh rate, **characterised in that** for the at least one signal pulse (P1 to P16) a sequence (F) of several part pulses (T1 to T10) is produced and the memory content (Zn) is changed with the image refresh rate on the basis of the partial pulses (T1 to T10), wherein at least occasionally the image content (22) is shifted with each shifting step to a target position (13) formed from the memory content by means of a smoothing filter.

2. Method according to claim 1, wherein each signal pulse (P1 to P16) is filtered using a filter (40) in order to generate the partial pulses (T1 to T10).

3. Method according to either claim 1 or 2, wherein the sum of pulse amplitude values of the partial pulses (T1 to T9) generated for a signal pulse (P1 to P16) is equal to a pulse amplitude value of the signal pulse (P1 to P16).

4. Method according to any one of the preceding claims, wherein the sequence (F) of partial pulses (T1 to T10) generated for each signal pulse (P1 to P16) comprises no more than 4 partial pulses at an image refresh rate of 60 Hz and no more than 8 partial pulses at an image refresh rate of 120 Hz, and/or the sequence has a duration of less than 80 ms, in particular less than 40 ms.

5. Method according to any one of the preceding claims, wherein a step size (38) of at least one of the shifting steps is defined as a function of a difference (D) between an actual position (11, 12) of the image content (22) on the screen (18) and the target position (Zn).

6. Method according to claim 5, wherein the difference value (D) is assigned to a multiplication factor (F) for a basis step size and the step size (38) is calculated by multiplying the basic step size by the multiplication factor (F).

7. Method according to any one of the preceding claims, wherein at least occasionally the image content (22) is shifted with each shifting step directly to the target position currently predefined by the memory content (Zn).

8. Method according to any one of the preceding claims, wherein a PT1 element is used as a smoothing filter.

9. Method according to any one of the preceding claims, wherein a scrolling speed is increased by increasing the step size (38) of at least one upcoming shifting step, if signal pulses are produced at a predetermined maximum pulse rate and/or a pulse amplitude of at least one signal pulse (P6, P7, P8) is greater than a predetermined threshold.

10. Method according to claim 9, wherein the scrolling speed is only reduced if no further signal pulses are generated for a predetermined period, the period being preferably in a range of 30 ms to 60 ms.

11. Method according to any one of the preceding claims, wherein a step size (38) of at least one of the shifting steps is adjusted as a function of an animation characteristic curve.

12. Method according to any one of the preceding claims, wherein the image content (22) comprises a list cursor and a check is made to see whether the pulse rate and/or a pulse amplitude of at least one signal pulse is greater than a respective predetermined threshold and if necessary a step size (38) of at least one of the shifting steps is adjusted to a grid spacing (48) of list entries (26 to 32) of the list or a multiple of the grid spacing (48).

13. Display device (10) of a motor vehicle, comprising a screen (18), at least one operating element (12, 14), which on activation generates at least one signal pulse, and a control device (16) which comprises a target memory (42) and is coupled to the operating element (12, 14) and which is configured to display an image content (22) on the screen (18) and to shift the latter on the screen (18) according to a method according to any one of the preceding claims.

14. Display device (10) according to claim 13, wherein the display device (10) is designed as a combination instrument or as an infotainment system.

## Revendications

1. Procédé de fonctionnement d'un dispositif d'affichage (10) d'un véhicule automobile, par lequel un contenu d'image (22) est déplacé sur un écran d'affichage (18) à un pas de déplacement ou plusieurs pas de déplacement réalisés l'un après l'autre à une fréquence de rafraîchissement d'images jusqu'à une position cible, la position cible étant en l'occurrence définie par un contenu (Zn) d'une mémoire de position cible (42) et le contenu de mémoire (Zn) étant modifié en fonction d'au moins une impulsion de signal (P1 à P16), que produit un élément de réglage (12) activé par un utilisateur, dans lequel des impulsions de signal successives (P1 à P16) sont produites par l'élément de réglage (12) à un taux d'impulsion qui est inférieur à la fréquence de rafraîchissement d'images,
**caractérisé en ce que**,
pour former au moins une impulsion de signal (P1 à P16) est produite respectivement une cadence (F) de plusieurs impulsions partielles (T1 à T10) et le contenu de mémoire (Zn) est modifié avec la fréquence de rafraîchissement d'images en fonction des impulsions partielles (T1 à T10), dans lequel au moins par intervalles le contenu d'image (22) est déplacé à chaque pas de déplacement dans une position cible (13) formée à partir du contenu de mémoire au moyen d'un filtre de lissage.

2. Procédé selon la revendication 1, dans lequel, pour la production des impulsions partielles (T1 à T10), chaque impulsion de signal (P1 à P16) est filtrée avec un filtre (40).

3. Procédé selon la revendication 1 ou la revendication 2, dans lequel, respectivement, la somme des valeurs d'amplitudes des impulsions partielles (T1 à T9) produites pour former l'impulsion de signal (P1 à P16) est égale à la valeur d'amplitude de l'impulsion de signal (P1 à P16) .

4. Procédé selon l'une quelconque des revendications précédentes, dans lequel la cadence (F) des impulsions partielles (T1 à T10) formées pour chaque impulsion de signal (P1 à P16) ne comprend pas plus de 4 impulsions partielles à une fréquence de rafraîchissement d'images de 60 Hz ou pas plus de 8 impulsions partielles à une fréquence de rafraîchissement d'images de 120 Hz et/ou la durée de la cadence est plus courte que 80 ms, en particulier plus courte que 40 ms.

5. Procédé selon l'une quelconque des revendications précédentes, dans lequel un incrément de pas (38) d'au moins l'un des pas de déplacement est fixé en fonction d'une valeur de différence (D) entre une position nominale (I1, I2) du contenu d'image (22) sur l'écran d'affichage (18) et la position cible (Zn) .

6. Procédé selon la revendication 5, dans lequel la valeur de différence (D) est affectée à un facteur de multiplication (F) pour un incrément de pas de base et l'incrément de pas (38) est calculé par multiplication de l'incrément de pas de base par le facteur de multiplication (F).

7. Procédé selon l'une quelconque des revendications précédentes, dans lequel, au moins par intervalles, le contenu d'image (22) est déplacé à chaque pas de déplacement directement à la position cible couramment définie par le contenu de mémoire (Zn).

8. Procédé selon l'une quelconque des revendications précédentes, dans lequel on utilise comme filtre de lissage un élément PT1.

9. Procédé selon l'une quelconque des revendications précédentes, dans lequel la vitesse de défilement d'images est augmentée par renforcement de l'incrément de pas (38) d'au moins un pas de déplacement imminent, au cas où des impulsions de signal sont produites avec un taux d'impulsion maximal prédéterminé et/ou que l'amplitude d'au moins une impulsion de signal (P6, P7, P8) est supérieure à une valeur de seuil prédéterminée.

10. Procédé selon la revendication 9, dans lequel la vitesse de défilement d'images n'est à nouveau réduite que dans le cas où aucune autre impulsion de signal n'est produite pendant une période de temps prédéterminée, dans lequel la période de temps se situe de préférence dans une plage de 30 ms à 60 ms.

11. Procédé selon l'une quelconque des revendications précédentes, dans lequel un incrément de pas (38) d'au moins l'un des pas de déplacement est réglé en fonction d'une caractéristique d'animation.

12. Procédé selon l'une quelconque des revendications précédentes, dans lequel le contenu d'image (22) comprend un curseur de liste et est contrôlé pour savoir si le taux d'impulsion et/ou l'amplitude d'impulsion d'au moins une impulsion de signal est ou sont plus grands qu'une valeur de seuil prédéterminée respective et, éventuellement, un incrément de pas (38) au moins de l'un des pas de déplacement est réglée à un espacement de trame (48) d'entrées (26 à 32) de la liste ou à un multiple de l'espacement de trame (48).

13. Dispositif d'affichage (10) d'un véhicule automobile, comprenant un écran d'affichage (18), au moins un élément de réglage (12, 14), qui produit au moins une impulsion de signal lorsqu'il est réglé et un dispositif de commande (16) qui présente une mémoire de cible (42) et est couplé à l'élément de réglage (12, 14) et est conçu de manière à afficher sur l'écran d'affichage (18) un contenu d'image (22) et à déplacer celui-ci sur l'écran d'affichage (18) par un procédé selon l'une quelconque des revendications précédentes.

14. Dispositif d'affichage (10) selon la revendication (13), dans lequel le dispositif d'affichage (10) se présente sous la forme d'un instrument combiné ou d'un système d'info-divertissement.
